# EUROPÄISCHE PATENTANMELDUNG

(11) **EP 3 825 119 A1**
(43) Veröffentlichungstag der Anmeldung: **26.05.2021**
(21) Anmeldenummer: 20208364.8
(22) Anmeldetag: 18.11.2020
(51) Int. Cl.: B32B 15/01, C22C 21/00, C22C 21/14, F16C 33/00

(54) **MEHRSCHICHTGLEITLAGERELEMENT**

(30) Priorität: 19.11.2019 AT 5020219 U
(71) Anmelder: Miba Gleitlager Austria GmbH, 4663 Laakirchen (AT)
(72) Erfinder: JANISCH, Sigmar Dominic, 4663 Laakirchen (AT); SCHINAGL, Matthias, 4020 Linz (AT)
(74) Vertreter: Burger, Hannes

(57) **Zusammenfassung**

Die Erfindung betrifft ein Mehrschichtgleitlagerelement (1) mit einer Stützschicht (2), einer Lagermetallschicht (4) und einer Bindeschicht (3), die zwischen der Stützschicht (2) und der Lagermetallschicht (4) angeordnet ist, wobei die Bindeschicht (3) zwischen 0 Gew.-% und 1 Gew.-% Zinn, zwischen 1 Gew.-% und 3 Gew.-% Kupfer, zwischen 0,4 Gew.-% und 1 Gew.-% Mangan, zwischen 0 Gew.-% und 0,3 Gew.-% Chrom, zwischen 0 Gew.-% und 0,15 Gew.-% Kobalt, zwischen 0,05 Gew.-% und 0,15 Gew.-% Zirkonium, zwischen 0,2 Gew.-% und 0,4 Gew.-% Silizium und zwischen 0,05 Gew.-% und 0,2 Gew.-% Titan enthält und den Rest auf 100 Gew.-% Aluminium bildet, und die Lagermetallschicht (4) zwischen 16 Gew-% und 32 Gew-% Zinn, zwischen 0,5 Gew.-% und 2,5 Gew.- % Kuper, zwischen 0,2 Gew.-% und 1 Gew.-% Mangan, zwischen 0 Gew.-% und 0,3 Gew.-% Chrom, zwischen 0 Gew.-% und 0,15 Gew.-% Kobalt, zwischen 0 Gew.-% und 0,15 Gew.-% Zirkonium, zwischen 0,05 Gew.-% und 0,2 Gew.-% Titan enthält und den Rest Aluminium bildet.

## Beschreibung

Die Erfindung betrifft ein Mehrschichtgleitlagerelement mit einer Stützschicht, einer Lagermetallschicht und einer Bindeschicht, die zwischen der Stützschicht und der Lagermetallschicht angeordnet ist, wobei die Lagermetallschicht aus einer ersten Aluminiumbasislegierung und die Bindeschicht aus einer zweiten Aluminiumbasislegierung gebildet sind, und die zweite Aluminiumbasislegierung zwischen 0 Gew.-% und 1 Gew.-% Zinn, zwischen 1 Gew.-% und 3 Gew.-% Kupfer, zwischen 0,4 Gew.-% und 1 Gew.-% Mangan, zwischen 0 Gew.-% und 0,3 Gew.-% Chrom, zwischen 0 Gew.-% und 0,15 Gew.-% Kobalt, zwischen 0,05 Gew.-% und 0,15 Gew.-% Zirkonium, zwischen 0,2 Gew.-% und 0,4 Gew.-% Silizium und zwischen 0,05 Gew.-% und 0,2 Gew.-% Titan enthält und den Rest auf 100 Gew.-% Aluminium sowie gegebenenfalls aus der Herstellung der Elemente stammende Verunreinigungen bilden.

Aus ökologischen Gründen sollen bleihaltige Legierungen in Gleitlagern vermieden werden. Es gibt dazu bereits verschiedene Ansätze von Gleitschichtlegierungen im Stand der Technik. So wird beispielsweise bei Gusslegierungen auf Basis von Messing oder Bronzen mit Hilfe von Legierungszusätzen, wie z.B. Chrom, Mangan, Zirkonium oder Aluminium, versucht, die Reibungseigenschaften zu verbessern und im Speziellen die Fressneigung zu verringern. Daneben gibt es auch diverse Aluminiumlegierungen.

Beispielsweise beschreibt die WO 97/22725 A1 eine Aluminiumlegierung für eine Schicht eines Gleitlagers, der als Hauptlegierungselement Zinn und ein Hartstoff aus zumindest einem Element einer Eisen, Mangan, Nickel, Chrom, Kobalt, Kupfer bzw. Platin, Magnesium, Antimon enthaltenden ersten Elementgruppe zugesetzt ist, wobei der Aluminiumlegierung von der ersten Elementgruppe eine Menge an Elementen zur Bildung intermetallischer Phasen, z.B. Aluminiden, in den Grenzbereichen der Matrix zugesetzt ist und weiter zumindest ein weiteres Element aus einer zweiten Mangan, Antimon, Chrom, Wolfram, Niob, Vanadium, Kobalt, Silber, Molybdän oder Zirkonium enthaltenden Elementgruppe zur Substituierung eines Teils zumindest eines Hartstoffes der ersten Elementgruppe zur Bildung von annähernd kugel- bzw. würfelförmigen Aluminiden zugesetzt ist.

Es ist auch bekannt, zur Verbesserung der Haftfestigkeit der Lagerlegierungsschicht auf einer Stahlstützplatte eine Zwischenbindungsschicht zu verwenden, die ebenfalls aus einer Aluminiumlegierung besteht. Beispielsweise beschreibt die DE 43 32 433 A1 eine Zwischenbindungsschicht aus einer Aluminiumlegierung, die im Wesentlichen mindestens einer der folgenden Komponenten aufweist, deren Menge auf das Gewicht bezogen ist: bis zu 1,7% Mn, bis zu 1,2% Cu und bis zu 1,8% Mg und zum Rest A1 und erschmelzungsbedingte Verunreinigungen, und wobei das Verhältnis der Härte der Zwischenbindungsschicht aus der Aluminiumlegierung zu einer darauf angeordneten Al-Sn-Lagerlegierung mit, auf das Gewicht bezogen, 7 bis 20% Sn und zum Rest A1, ausgedrückt als Vickers-Härte (HV), 70% überschreitet und nicht mehr als 90% beträgt. Weiter kann vorgesehen sein, dass die Aluminiumlegierung der Zwischenbindungsschicht insgesamt bis zu 3 Gew.-% von mindestens einem der Elemente Si, Cr, Ti und Fe enthält.

Es sind auch andere Aluminiumlegierungen für die Zwischenbindungsschicht verwendet worden, wie beispielsweise A13Sc (WO 00/06788 A1). Daneben sind im Stand der Technik noch Ausführungen beschrieben worden, bei denen die Lagerlegierungsschicht über eine Bindefolie aus Reinaluminium mit der Stahlstützschicht verbunden ist.

Die AT 518 875 A4 beschreibt ein Mehrschichtgleitlagerelement mit einer Stützschicht und einer darauf angeordneten Schicht aus einer Aluminiumbasislegierung mit Aluminium als Hauptbestandteil, wobei die Aluminiumbasislegierung zwischen 0 Gew.-% und 7 Gew.-% Zinn, zwischen 1,1 Gew.-% und 1,9 Gew.-% Kupfer, zwischen 0,4 Gew.-% und 1 Gew.-% Mangan, zwischen 0,05 Gew.-% und 0,18 Gew.-% Kobalt, zwischen 0,05 Gew.-% und 0,18 Gew.-% Chrom, zwischen 0,03 Gew.-% und 0,1 Gew.-% Titan, zwischen 0,05 Gew.-% und 0,18 Gew.-% Zirkonium und zwischen 0 Gew.-% und 0,4 Gew.-% Silizium enthält und den Rest auf 100 Gew.-% Aluminium sowie gegebenenfalls aus der Herstellung der Elemente stammende Verunreinigungen bilden, mit der Maßgabe, dass jedenfalls Zinn oder Silizium in der Aluminiumbasislegierung enthalten ist.

Der vorliegenden Erfindung liegt die Aufgabe zu Grunde ein bleifreies Mehrschichtgleitlagerelement zu schaffen.

Die Aufgabe der Erfindung wird bei dem eingangs genannten Mehrschichtgleitlagerelement dadurch gelöst, dass die erste Aluminiumbasislegierung zwischen 16 Gew-% und 32 Gew-% Zinn, zwischen 0,5 Gew.-% und 2,5 Gew.- % Kuper, zwischen 0,2 Gew.-% und 1 Gew.-% Mangan, zwischen 0 Gew.-% und 0,3 Gew.-% Chrom, zwischen 0 Gew.-% und 0,15 Gew.-% Kobalt, zwischen 0 Gew.-% und 0,15 Gew.-% Zirkonium, zwischen 0,05 Gew.-% und 0,2 Gew.-% Titan enthält und den Rest Aluminium sowie gegebenenfalls aus der Herstellung der Elemente stammende Verunreinigungen bilden.

Von Vorteil ist dabei, dass durch die Kombination der beiden Aluminiumbasislegierungen, das Mehrschichtgleitlagerelement die "tribologische Gutmütigkeit" von bekannten Aluminiumbasislegierungen zeigt, und gleichzeitig durch das ähnliche Legierungskonzept eine gute Haftung zwischen den beiden Aluminiumlegierungsschichten sowie eine gute Haftung auf dem Untergrund aufweist. Es ist damit nicht nur möglich, das Mehrschichtgleitlagerelement in Bleifreianwendungen einzusetzen, sondern kann damit auch eine größere Schichtdicke der Lagermetallschicht bereitgestellt werden, die ein größeres Anwendungsgebiet des Mehrschichtgleitlagerelementes eröffnet. Zudem kann die Herstellung des Mehrschichtgleitlagerelementes vereinfacht werden, da die Aluminiumbasislegierungen durch einfaches Kaltwalzen ohne anschließendes warmes Nachwalzen plattiert werden können.

Zur weiteren Verbesserung dieser Eigenschaften kann nach einer Ausführungsvariante des Mehrschichtgleitlagerelementes vorgesehen sein, dass der Anteil an Zinn in der ersten Aluminiumbasislegierung zwischen 19,1 Gew-% und 30 Gew-% beträgt. Oberhalb von 30 Gew.-% Zinn wird zwar die Einbettfähigkeit der Lagermetallschicht für Partikel, die beispielsweise aus dem Abrieb stammen, verbessert, allerdings kann bei höheren Zinngehalten ab 30 Gew.-% (insbesondere ab 32 Gew.-%) der Beginn der Ausbildung eines ausgeprägten Zinnnetzes beobachtet werden, das hinsichtlich der Belastbarkeit des Mehrschichtgleitlagerelementes negative Eigenschaften aufweist. Mit einem Zinngehalt ab 19,1 Gew.-% konnte ebenfalls eine Verbesserung der mechanischen Eigenschaften des Mehrschichtgleitlagerelementes erreicht werden (verglichen mit einem Mindestanteil an Zinn von 16 Gew.-%).

Im Rahmen der Evaluierung des Mehrschichtgleitlagerelementes konnte weiter festgestellt werden, dass dessen tribologischen Eigenschaften verbessert werden können, wenn gemäß einer Ausführungsvariante vorgesehen ist, dass in der ersten Aluminiumbasislegierung der Anteil an Zinn zwischen 22 Gew-% und 27 Gew-%, der Anteil an Kupfer zwischen 1 Gew.-% und 2 Gew.- % und der Anteil an Mangan zwischen 0,4 Gew.-% und 0,8 Gew.-% beträgt.

Nach einer anderen Ausführungsvariante des Mehrschichtgleitlagerelementes kann vorgesehen sein, dass ein Teil des Aluminiums in der ersten Aluminiumbasislegierung durch Silizium ersetzt ist, wobei der Anteil an Silizium zwischen 0,01 Gew.-% und 4 Gew.-% beträgt. Durch die damit zusätzlich in die Legierung eingebrachten Silizium-Hartphasen kann im sogenannten Ring-on-Disc Test eine signifikante Steigerung der Fressgrenzlast und eine Minimierung des Verschleißes erreicht werden. Dies kann durch das Aufwachsen einer "Tribo-Schicht" während des Laufes des Mehrschichtgleitlagerelementes erreicht werden. Die Schicht bildet sich verstärkt in Bereichen, die einer erhöhten Belastung/Verschleiß ausgesetzt sind und wirkt somit der Belastung/verschleiß entgegen. Durch das Vorsehen der Silizium-Phasen an oder in den weichen Zinn-Phasen können diese im Lauf leichter herausbrechen. Die herausgebrochenen Partikel zerbrechen in der Folge weiter, und diese feinen Partikel lagern sich dann mit tribologisch aktiven Substanzen aus dem Öl bzw. Schmiermittel an der Oberfläche ab und bilden die oben genannte Tribo-Schicht.

Zur weiteren Verbesserung dieses Effektes kann nach einer weiteren Ausführungsvariante des Mehrschichtgleitlagerelementes vorgesehen sein, dass das Verhältnis der Mengenanteile von Zinn zu Silizium zwischen 4 : 1 und 30 : 1 beträgt.

Wie bereits erwähnt, liegt vorzugsweise das Silizium als Ausscheidung in der Zinnphase vor, wodurch die Bindung Siliziums zur Aluminiummatrix schwächer ist und die genannten Hartpartikel einfacher ausbrechen können. Es kann dabei gemäß einer Ausführungsvariante des Mehrschichtgleitlagerelementes vorgesehen sein, dass der Anteil des Siliziums, der als Ausscheidung in oder an der Zinnphase der ersten Aluminiumbasislegierung vorliegt, bezogen auf den gesamten Siliziumanteil der ersten Aluminiumbasislegierung zwischen 80 % und 100 % beträgt.

Als besonderes effektiv haben sich im Zuge des Probebetriebes des Mehrschichtgleitlagerelementes Ausführungsvarianten herausgestellt, bei denen in der ersten Aluminiumbasislegierung zwischen 24 Gew-% und 26 Gew-% Zinn, zwischen 1,2 Gew.-% und 1,4 Gew.- % Kuper, zwischen 0,4 Gew.-% und 0,6 Gew.-% Mangan, jeweils zwischen 0,05 Gew.-% und 0,07 Gew.-% Chrom, Kobalt und Zirkonium und zwischen 0,06 Gew.-% und 0,08 Gew.-% Titan enthalten sind, und/oder bei denen in der zweiten Aluminiumbasislegierung zwischen 1,6 Gew.-% und 1,8 Gew.- % Kuper, zwischen 0,7 Gew.-% und 0,9 Gew.-% Mangan, jeweils zwischen 0,12 Gew.-% und 0,14 Gew.-% Chrom, Kobalt und Zirkonium, zwischen 0,2 Gew.-% und 0,4 Gew.-% Silizium und zwischen 0,06 Gew.-% und 0,08 Gew.-% Titan enthalten sind.

Wie bereits voranstehend erwähnt, kann durch die Kombination der beiden Aluminiumbasislegierungen die Schichtdicke der Lagermetallschicht erhöht werden. Dabei kann gemäß einer weiteren Ausführungsvariante des Mehrschichtgleitlagerelementes die Lagermetallschicht eine Schichtdicke zwischen 1000 µm und 3000 µm aufweisen, womit das Mehrschichtgleitlagerelement auch in Windkraftanlagen eingesetzt werden kann, beispielsweise Hautlagern oder in Lagern von Planetengetrieben von Windkraftanlagen.

Zum besseren Verständnis der Erfindung wird diese anhand der nachfolgenden Figuren näher erläutert.

Es zeigen jeweils in vereinfachter, schematischer Darstellung:
- Fig. 1: ein Mehrschichtgleitlagerelement in Schrägansicht;
- Fig. 2: einen Ausschnitt aus einer Lagermetallschicht;
- Fig. 3: Ergebnisse von RoD Messungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Zudem sei festgehalten, dass sich Angaben zu Normen auf die zum Anmeldezeitpunkt dieser Anmeldung bzw. der gegebenenfalls vorausgegangenen Anmeldung, deren Priorität beansprucht wird, letztgültige Fassung beziehen, sofern nicht etwas Anderes ausdrücklich angegeben ist.

Sämtliche Angaben zur mengenmäßigen Zusammensetzung der Aluminiumbasislegierung(en) sind in Gew.-% zu verstehen, sofern nicht ausdrücklich etwas anderes angegeben ist.

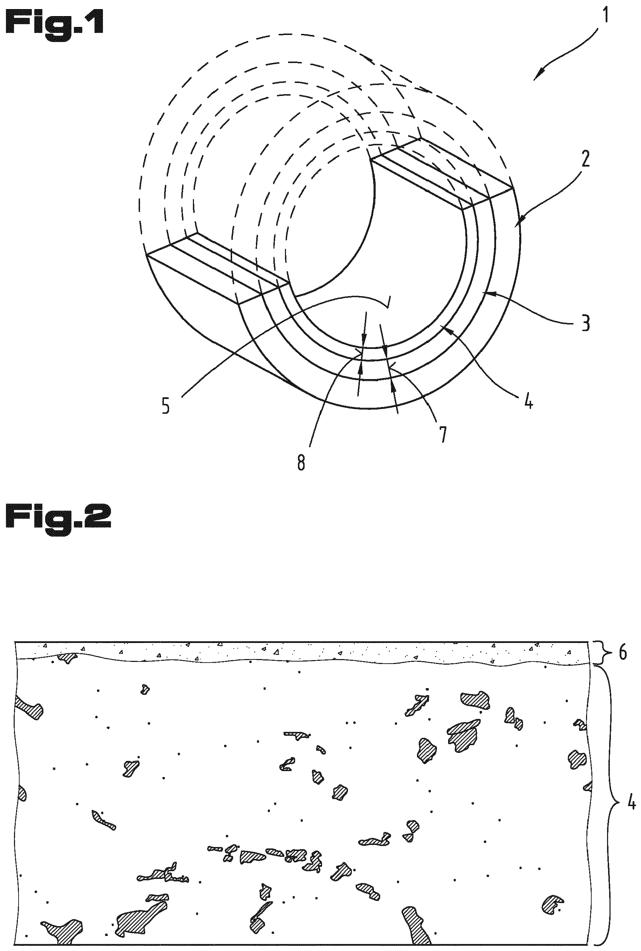

Fig. 1 zeigt ein Mehrschichtgleitlagerelement 1 in Schrägansicht. Das Mehrschichtgleitlagerelement 1 umfasst bzw. besteht aus eine(r) (bevorzugt radial äußersten) Stützschicht 2 und eine(r) darauf angeordneten und mit dieser verbundenen Bindeschicht 3 und einer damit verbundenen Lagermetallschicht 4.

Das nicht geschlossene Mehrschichtgleitlagerelement 1 kann neben der dargestellten Halbschalenausführung mit einer Winkelbereich-Überdeckung von zumindest annähernd 180 ° auch eine davon abweichende Winkelbereich-Überdeckung aufweisen, beispielsweise zumindest annähernd 120 ° oder zumindest annähernd 90 °, sodass also das Mehrschichtgleitlagerelement 1 auch als Drittelschale oder als Viertelschale ausgebildet sein kann, die mit entsprechenden weiteren Lagerschalen in einer Lageraufnahme kombiniert werden, wobei das Mehrschichtgleitlagerelement 1 nach der Erfindung bevorzugt im höher belasteten Bereich der Lageraufnahme eingebaut wird.

Es sind aber auch andere Ausführungsvarianten des Mehrschichtgleitlagerelements 1 möglich, beispielsweise eine Ausführung als Lagerbuchse, wie dies in Fig. 1 strichliert angedeutet ist, oder eine ebene Ausführung, beispielsweise als Anlaufscheibe, oder als Gleitlagerpads.

Die Stützschicht 2 besteht üblicherweise aus einem harten Werkstoff. Als Werkstoffe für die Stützschicht 2, auch Stützschale genannt, können Bronzen, Messing, etc. verwendet werden. In der bevorzugten Ausführungsvariante der Erfindung besteht die Stützschicht 2 aus einem eisenbasierten Werkstoff, insbesondere aus einem Stahl.

Derartige konstruktive Aufbauten von Mehrschichtgleitlagerelementen 1 sind prinzipiell aus dem Stand der Technik bekannt, sodass diesbezüglich auf den einschlägigen Stand der Technik verwiesen sei.

Die Bindeschicht 3 besteht aus einer zweiten Aluminiumbasislegierung. Die zweite Aluminiumbasislegierung besteht aus:
0 Gew.-% und 1 Gew.-% Zinn,
1 Gew.-% und 3 Gew.-% Kupfer
0,4 Gew.-% und 1 Gew.-% Mangan
0 Gew.-% und 0,3 Gew.-% Chrom
0 Gew.-% und 0,15 Gew.-% Kobalt
0,05 Gew.-% und 0,15 Gew.-% Zirkonium
0,2 Gew.-% und 0,4 Gew.-% Silizium
0,05 Gew.-% und 0,2 Gew.-% Titan.

Den Rest auf 100 Gew.-% bilden als Hauptbestandteil der Aluminiumbasislegierung das Aluminium sowie gegebenenfalls aus der Herstellung der Elemente stammende Verunreinigungen.

Die prinzipiellen Wirkungen der einzelnen Legierungselemente sind im Stand der Technik ausreichend dargestellt und dem Fachmann bekannt, sodass auf deren Wiederholung verzichtet wird.

Die jeweiligen Anteile der einzelnen Legierungselemente an der Aluminiumbasislegierung wurden aus folgenden Gründen gewählt, wobei unterhalb der jeweils angegebenen Untergrenze der Anteilsbereiche die Wirkung des zugesetzten Elementes jeweils nicht ausreichend ist:
1 Gew.-% Zinn: Bei mehr als 1 Gew.-% Zinn sinkt die Festigkeit der Bindeschicht und die Haftung zum Untergrund sinkt.
3 Gew.-% Kupfer: Bei mehr als 3 Gew.-% Kupfer wird die Umformbarkeit der Aluminiumbasislegierung reduziert.
0,2 Gew.-% Titan: Bei mehr als 0,2 Gew.-% Titan können Korrosionsprobleme auftreten, die die Dauerstandfestigkeit der Aluminiumbasislegierung reduzieren können.
1 Gew.-% Mangan; 0,15 Gew.-% Kobalt; 0,3 Gew.-% Chrom; 0,15 Gew.-% Zirkonium; 0,4 Gew.-% Silizium: Bei einem Anteil der jeweiligen Elemente von mehr als den angegebenen Obergrenzen erhöhen sich die Größen der Ausscheidung ohne zusätzlichen Festigkeitsgewinn. Zudem nimmt die Kerbwirkung der Ausscheidungen zu.

Titan kann bis zur Hälfte des voranstehend genannten Titananteils an der Aluminiumbasislegierung auch durch Zirkonium und/oder Scandium ersetzt werden.

Weiter ist es möglich, dass zumindest ein Element der Gruppe Mangan, Kobalt und Chrom im Ausmaß von jeweils maximal des halben voranstehend genannten Mengenanteils dieser Elemente an der Aluminiumbasislegierung durch Vanadium und/oder Molybdän und/oder Eisen ersetzt wird.

Gemäß einer Ausführungsvariante können in der zweiten Aluminiumbasislegierung zwischen 1,6 Gew.-% und 1,8 Gew.- % Kuper, zwischen 0,7 Gew.-% und 0,9 Gew.-% Mangan, jeweils zwischen 0,12 Gew.-% und 0,14 Gew.-% Chrom, Kobalt und Zirkonium, zwischen 0,2 Gew.-% und 0,4 Gew.-% Silizium und zwischen 0,06 Gew.-% und 0,08 Gew.-% Titan enthalten sein.

Die Bindeschicht 3 kann unmittelbar auf der Stützschicht 2 angeordnet sein.

Die Bindeschicht 3 ist zwischen der Stützschicht 2 und der Lagermetallschicht 4 angeordnet ist. Die Lagermetallschicht 4 ist unmittelbar auf der Bindeschicht 3 angeordnet und mit dieser verbunden. Die Lagermetallschicht 4 bildet die Laufschicht des Mehrschichtgleitlagerelementes 1, sofern nicht noch eine gesonderte Laufschicht (auch als Gleitschicht bezeichenbar) auf der Lagermetallschicht 4 angeordnet ist.

Die erste Aluminiumbasislegierung der Lagermetallschicht 4 besteht aus:
16 Gew-% und 32 Gew-%, insbesondere 19,1 Gew-% und 30 Gew-%, Zinn
0,5 Gew.-% und 2,5 Gew.- % Kuper,
0,2 Gew.-% und 1 Gew.-% Mangan,
0 Gew.-% und 0,3 Gew.-% Chrom,
0 Gew.-% und 0,15 Gew.-% Kobalt,
0 Gew.-% und 0,15 Gew.-% Zirkonium,
0,05 Gew.-% und 0,2 Gew.-% Titan.
Den Rest auf 100 Gew.-% bilden als Hauptbestandteil der Aluminiumbasislegierung das Aluminium sowie gegebenenfalls aus der Herstellung der Elemente stammende Verunreinigungen.

Gemäß einer Ausführungsvariante kann die erste Aluminiumbasislegierung zwischen 22 Gew-% und 27 Gew-% Zinn, zwischen 1 Gew.-% und 2 Gew.- % Kupfer und zwischen 0,4 Gew.-% und 0,8 Gew.-% Mangan aufweisen.

Nach einer weiteren Ausführungsvariante des Mehrschichtgleitlagerelementes 1 kann in der ersten Aluminiumbasislegierung zwischen 24 Gew-% und 26 Gew-% Zinn, zwischen 1,2 Gew.-% und 1,4 Gew.- % Kuper, zwischen 0,4 Gew.-% und 0,6 Gew.-% Mangan, jeweils zwischen 0,05 Gew.-% und 0,07 Gew.-% Chrom, Kobalt und Zirkonium und zwischen 0,06 Gew.-% und 0,08 Gew.-% Titan enthalten sein.

Die erste Aluminiumbasislegierung kann bis auf zulässige Verunreinigungen der Metalle, aus denen die erste Aluminiumbasislegierung hergestellt wird, siliziumfrei sein. Gemäß einer anderen Ausführungsvariante des Mehrschichtgleitlagerelementes 1 kann jedoch vorgesehen sein, dass ein Teil des Aluminiums in der ersten Aluminiumbasislegierung durch Silizium ersetzt ist, wobei der Anteil an Silizium zwischen 0,01 Gew.-% und 4 Gew.-%, insbesondere zwischen 0,5 Gew.-% und 4 Gew.-%, beträgt.

Dabei kann vorgesehen sein, dass das Verhältnis der Mengenanteile von Zinn zu Silizium zwischen 4 : 1 und 30 : 1, insbesondere zwischen 6 : 1 und 20 : 1, beträgt.

Gemäß einer weiteren Ausführungsvariante des Mehrschichtgleitlagerelementes 1 kann vorgesehen sein, dass für Silizium innerhalb der Lagermetallschicht 4 ein Konzentrationsgradient ausgebildet ist, mit zunehmendem Siliziumanteil in Richtung auf eine Gleitfläche 5, auf der ein gelagertes Bauteil abgleitet. Beispielsweise kann die Konzentration des Siliziums in der Lagermetallschicht 4 von 0 Gew.-% oder 0,2 Gew.-% bis 0,4 Gew.-% an der Grenzfläche zur Bindeschicht 3, auf einen Wert von 3 Gew.-% an der Gleitfläche 5 zunehmen. Die Zunahme der Siliziumkonzentration kann dabei linear oder exponentiell oder sprunghaft erfolgen.

Vorzugsweise beträgt der Anteil des Siliziums, der als Ausscheidung in oder an der Zinnphase der ersten Aluminiumbasislegierung vorliegt, bezogen auf den gesamten Siliziumanteil der ersten Aluminiumbasislegierung zwischen 80 % und 100 %.

Die Siliziumausscheidungen können eine mittlere Größe zwischen 4 µm und 25 µm aufweisen. Es können damit die voranstehend genannten Effekte zu den Siliziumausscheidungen einfacher erreicht werden.

Die mittlere Größe wird dabei als arithmetischer Mittelwert aus dem Schliffbild der jeweiligen Aluminiumbasislegierung nach dem Linienschnittverfahren bestimmt, wie dies an sich bekannt ist. Dazu werden über die mikroskopische Aufnahme Linien mit definierter Strecke aufgetragen. An jedem Punkt, an dem die Linie eine Korngrenze überschreitet erfolgt eine Markierung. Die Bestimmung der mittleren Größe der Ausscheidungen kann analog zu DIN EN ISO 643 erfolgen.

Ausscheidungen, die in der Aluminiummatrix der ersten Aluminiumbasislegierung vorliegen können, sind z.B. elementares Silizium, Mischphase, wie z.B. AlCuMnSiCoCrZr, intermetallische Phasen, wie z.B. Al2Cu, und Sn.

Wie voranstehend ausgeführt, kann durch die Zugabe von Silizium auf der Gleitfläche 5 der Lagermetallschicht 3 im Betrieb eine Triboschicht 6 gebildet werden, wie dies die Fig. 2 zeigt, aus der ein Ausschnitt aus der Lagermetallschicht 4 zu sehen ist. Das Mehrschichtgleitlagerelement 1 ist 6 Stunden gelaufen, wobei als Schmiermittel Shell Rimula R3 10W und als Gegenkörper ein gehärteter Ring aus 34CrNiMo6 verwendet wurde.

Die Triboschicht 6 bestand in diesem Fall aus C, O, P, S, Ca and Zn. Sie kann je nach Öladditiven in der Zusammensetzung variieren.

Die intermetallischen Ausscheidungen sind Verbindungen der Elemente Kupfer und/oder Mangan und/oder Kobalt und/oder Chrom und/oder Titan und/oder Zirkonium jeweils mit Aluminium und/oder der Elemente untereinander. Beispielsweise sind dies die intermetallischen Verbindungen Al₂Cu, Al₆Mn(Fe, Cr, Co).

Die Bindeschicht 3 kann eine Schichtdicke 7 zwischen 100 µm und 1000 µm aufweisen.

Die Lagermetallschicht 4 kann eine Schichtdicke 8 zwischen 300 µm und 1000 µm aufweisen. Für Anwendungen des Mehrschichtgleitlagerelementes 1 in Windkraftanlagen kann die Lagermetallschicht 4 auch eine Schichtdicke 8 zwischen 1000 µm und 3000 µm aufweisen.

Das Mehrschichtgleitlagerelement 1 kann mit üblichen, aus dem Stand der Technik bekannten Verfahren hergestellt werden. Beispielsweise kann die Bindeschicht 3 mit der Stützschicht 2 walzplattiert werden. Es besteht auch die Möglichkeit, dass die Bindeschicht 3 auf die Stützschicht 2 aufgegossen wird. Die Lagermetallschicht 4 kann mit dem Verbundmaterial aus Stützschicht 2 und Bindeschicht 3 walzplattiert werden. Ebenso kann die Lagermetallschicht 4 auf die Bindeschicht 3 aufgegossen werden. Daneben besteht auch die Möglichkeit, dass in einem ersten Schritt ein Verbundwerkstoff aus der Bindeschicht 3 und der Lagermetallschicht 4 hergestellt wird, beispielsweise mittels Walzplattieren, und dass in weiterer Folge dieser Verbundwerkstoff mit der Stützschicht 2 verbunden wird, beispielsweise mittels Walzplattieren.

Der oben angesprochene Konzentrationsgradient für Silizium kann über die Abkühlbedingungen der Aluminiumbasislegierung, das Gießverfahren an sich, durch ein Spritzverfahren, etc. hergestellt werden.

Die Ausbildung der voranstehend genannten Größen der intermetallischen Verbindungen kann durch eine schnelle Abkühlung der Aluminiumbasislegierung erreicht werden. An sich ist es dem Fachmann bekannt, dass durch schnellere Abkühlung ein feinkörnigeres Gefüge erreicht werden kann, sodass sich also Ausführungen zu den Abkühlbedingungen erübrigen.

Es besteht im Rahmen der Erfindung neben der zweischichtigen oder dreischichtigen Ausführung des Mehrschichtgleitlagerelementes 1 auch die Möglichkeit, dass auf die weiteren Lagermetallschicht 4 eine Einlaufschicht aufgebracht wird, beispielsweise eine Reinzinnschicht oder eine Gleitlackschicht.

Im Zuge der Evaluierung des Mehrschichtgleitlagerelementes 1 wurden folgende Mustermehrschichtgleitlagerelemente hergestellt. Die Testmuster wurden mittels Walzplattieren hergestellt.

Für die Lagermetallschicht 4 wurden folgende in Tabelle 1 angeführte erste Aluminiumbasislegierungen verwendet.

**Tabelle 1: Zusammensetzungen von ersten Aluminiumbasislegierungen**

| Nr. | Sn | Cu | Mn | Co | Cr | Ti | Zr | Si |
|---|---|---|---|---|---|---|---|---|
| 1A | 16 | 0,5 | 0,2 | 0 | 0 | 0,05 | 0 | 0,01 |
| 2A | 24 | 2 | 0,6 | 0,1 | 0,15 | 0,07 | 0,1 | 2 |
| 3 A | 32 | 2,5 | 1 | 0,15 | 0,3 | 0,2 | 0,15 | 4 |

In Tabelle 2 sind Ausführungsbeispiele für zweite Aluminiumbasislegierungen wiedergegeben. Für jede in Tabelle 2 mit X B bezeichnete zweite Aluminiumbasislegierung wurde eine in Tabelle 1 mit X A bezeichnete erste Aluminiumbasislegierung verwendet, sodass also beispielsweise zum Ausführungsbeispiel 1 als Bindeschicht 3 die Aluminiumbasislegierung 1 B und als Lagermetallschicht 4 die Aluminiumbasislegierung 4 A gehört.

**Tabelle 2: Zusammensetzungen von Aluminiumbasislegierungen der Schicht 4**

| Nr. | Sn | Cu | Mn | Co | Cr | Ti | Zr | Si |
|---|---|---|---|---|---|---|---|---|
| 1B | 0 | 1 | 0,4 | 0 | 0 | 0 | 0,05 | 0,2 |
| 2B | 0,5 | 1,5 | 0,8 | 0,15 | 0,14 | 0,03 | 0,1 | 0,2 |
| 3 B | 1 | 3 | 1 | 0,3 | 0,3 | 0,1 | 0,15 | 0,4 |

Die Zahlenangaben in den Tabellen 1 und 2 sind jeweils in Gew.-% zu verstehen. Den Rest auf 100 Gew.-% bildet jeweils Aluminium.

Zudem wurde ein Mehrschichtgleitlagerelement 1 hergestellt, das eine Stahlstützschale als Stützschicht 2, als Lagermetallschicht 4 aus eine erste Aluminiumbasislegierung mit zwischen 24 Gew-% und 26 Gew-% Zinn, zwischen 1,2 Gew.-% und 1,4 Gew.- % Kuper, zwischen 0,4 Gew.-% und 0,6 Gew.-% Mangan, jeweils zwischen 0,05 Gew.-% und 0,07 Gew.-% Chrom, Kobalt und Zirkonium und zwischen 0,06 Gew.-% und 0,08 Gew.-% Titan, zwischen 0 und 0,2 Gew.-% Silizium, und als Bindeschicht 3 eine zweiten Aluminiumbasislegierung mit zwischen 1,6 Gew.-% und 1,8 Gew.- % Kuper, zwischen 0,7 Gew.-% und 0,9 Gew.-% Mangan, jeweils zwischen 0,12 Gew.-% und 0,14 Gew.-% Chrom, Kobalt und Zirkonium, zwischen 0,2 Gew.-% und 0,4 Gew.-% Silizium und zwischen 0,06 Gew.-% und 0,08 Gew.-% Titan, aufwies.

Es wurde auch ein Mehrschichtgleitlagerelement 1 hergestellt, das eine Stahlstützschale als Stützschicht 2, als Lagermetallschicht 4 aus eine erste Aluminiumbasislegierung mit zwischen 24 Gew-% und 26 Gew-% Zinn, zwischen 1,2 Gew.-% und 1,4 Gew.- % Kuper, zwischen 0,4 Gew.-% und 0,6 Gew.-% Mangan, jeweils zwischen 0,05 Gew.-% und 0,07 Gew.-% Chrom, Kobalt und Zirkonium und zwischen 0,06 Gew.-% und 0,08 Gew.-% Titan, zwischen 1 Gew.-% und 3 Gew.-% Silizium, und als Bindeschicht 3 eine zweiten Aluminiumbasislegierung mit zwischen 1,6 Gew.-% und 1,8 Gew.- % Kuper, zwischen 0,7 Gew.-% und 0,9 Gew.-% Mangan, jeweils zwischen 0,12 Gew.-% und 0,14 Gew.-% Chrom, Kobalt und Zirkonium, zwischen 0,2 Gew.-% und 0,4 Gew.-% Silizium und zwischen 0,06 Gew.-% und 0,08 Gew.-% Titan, aufwies.

Weiter wurde ein Mehrschichtgleitlagerelement 1 hergestellt, das eine Stahlstützschale als Stützschicht 2, als Lagermetallschicht 4 aus eine erste Aluminiumbasislegierung mit zwischen 25 Gew-% Zinn, 1,3 Gew.-% Kuper, 0,5 Gew.-% Mangan, jeweils 0,06 Gew.-% Chrom, Kobalt und Zirkonium, 0,07 Gew.-% Titan, und als Bindeschicht 3 eine zweiten Aluminiumbasislegierung mit 1,7 Gew.- % Kuper, 0,8 Gew.-% Mangan, 0,13 Gew.-% Chrom, Kobalt und Zirkonium, 0,3 Gew.-% Silizium und 0,07 Gew.-% Titan, aufwies.

Zudem wurde ein Mehrschichtgleitlagerelement 1 hergestellt, das eine Stahlstütz-schale als Stützschicht 2, als Lagermetallschicht 4 aus eine erste Aluminiumba-sislegierung mit zwischen 25 Gew-% Zinn, 1,3 Gew.-% Kuper, 0,5 Gew.-% Man-gan, jeweils 0,06 Gew.-% Chrom, Kobalt und Zirkonium, 0,07 Gew.-% Titan, 2 Gew.-% Silizium, und als Bindeschicht 3 eine zweiten Aluminiumbasislegierung mit 1,7 Gew.- % Kuper, 0,8 Gew.-% Mangan, 0,13 Gew.-% Chrom, Kobalt und Zirkonium, 0,3 Gew.-% Si-lizium und 0,07 Gew.-% Titan, aufwies.

Die Testmuster wurden einem RoD (Ring on Disk)Test unterzogen (1000 UpM (1,4m/s), 100°C, Shell Rimula R3 10W, Belastungsstufen werden 15 Min gehalten und dann innerhalb von 5 Min um je 1 MPa erhöht; für Versuche mit konstanter Geschwindigkeit wird die Belastung von 3 MPa für 120 Min. gehalten).

Es wurde jeweils eine Stützschicht 2 aus Stahl (HB30 = 155-182) verwendet.

Nachfolgende Ausführungen sind stellvertretend für die Ausführungsvarianten des Mehrschichtgleitlagerelementes 1 nach der Erfindung zu verstehen.

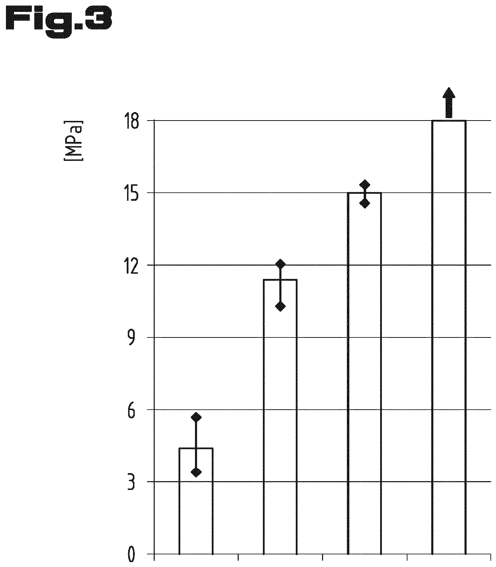

Es zeigte sich, dass die Mehrschichtgleitlagerelemente 1 hinsichtlich Verschleiß und Fressneigung vergleichbare Ergebnisse lieferten. In Hinblick auf eine vergleichbare AlsSn20Cu Legierung, die aus dem Stand der Technik bekannt ist, wurde eine deutliche Verbesserung der Fresslast erreicht, wie diese aus Fig. 3 ersichtlich ist. Dabei ist auf der Ordinate die Fressgrenzlast in [MPa] aufgetragen. Von links nach rechts bedeuten die Balken: AlSn15, AlSn20Cu, AlSn16 + Si, AlSn20Cu + Si.

| | Al | Sn | Cu | Mn | Cr | Zr | Co | Si |
|---|---|---|---|---|---|---|---|---|
| AlSn15 | Rest | 15,0% | 1,3% | 0,60% | 0,10% | 0,10% | 0,10% | 0,00% |
| AlSn20 | Rest | 20,0% | 1,3% | 0,60% | 0,10% | 0,10% | 0,10% | 0,00% |
| AlSn16+Si | Rest | 16,0% | 1,3% | 0,60% | 0,10% | 0,10% | 0,10% | 2,00% |
| AlSn20+Si | Rest | 20,0% | 1,3% | 0,60% | 0,10% | 0,10% | 0,10% | 2,00% |

Der Ordnung halber sei abschließend darauf hingewiesen, dass zum besseren Verständnis des Aufbaus des Mehrschichtgleitlagerelementes 1 dieses nicht zwingenderweise maßstäblich dargestellt ist.

### Bezugszeichenaufstellung

- 1: Mehrschichtgleitlagerelement
- 2: Stützschicht
- 3: Bindeschicht
- 4: Lagermetallschicht
- 5: Gleitfläche
- 6: Triboschicht
- 7: Schichtdicke
- 8: Schichtdicke

## Patentansprüche

1. Mehrschichtgleitlagerelement (1) mit einer Stützschicht (2), einer Lagermetallschicht (4) und einer Bindeschicht (3), die zwischen der Stützschicht (2) und der Lagermetallschicht (4) angeordnet ist, wobei die Lagermetallschicht (4) aus einer ersten Aluminiumbasislegierung und die Bindeschicht (3) aus einer zweiten Aluminiumbasislegierung gebildet sind, und die zweite Aluminiumbasislegierung die zwischen 0 Gew.-% und 1 Gew.-% Zinn, zwischen 1 Gew.-% und 3 Gew.-% Kupfer, zwischen 0,4 Gew.-% und 1 Gew.-% Mangan, zwischen 0 Gew.-% und 0,3 Gew.-% Chrom, zwischen 0 Gew.-% und 0,15 Gew.-% Kobalt, zwischen 0,05 Gew.-% und 0,15 Gew.-% Zirkonium, zwischen 0,2 Gew.-% und 0,4 Gew.-% Silizium und zwischen 0,05 Gew.-% und 0,2 Gew.-% Titan enthält und den Rest auf 100 Gew.-% Aluminium sowie gegebenenfalls aus der Herstellung der Elemente stammende Verunreinigungen bilden, **dadurch gekennzeichnet, dass** die erste Aluminiumbasislegierung zwischen 16 Gew-% und 32 Gew-% Zinn, zwischen 0,5 Gew.-% und 2,5 Gew.- % Kuper, zwischen 0,2 Gew.-% und 1 Gew.-% Mangan, zwischen 0 Gew.-% und 0,3 Gew.-% Chrom, zwischen 0 Gew.-% und 0,15 Gew.-% Kobalt, zwischen 0 Gew.-% und 0,15 Gew.-% Zirkonium, zwischen 0,05 Gew.-% und 0,2 Gew.-% Titan enthält und den Rest Aluminium sowie gegebenenfalls aus der Herstellung der Elemente stammende Verunreinigungen bilden.

2. Mehrschichtgleitlagerelement (1) nach Anspruch 1, **dadurch gekennzeichnet, dass** der Anteil an Zinn in der ersten Aluminiumbasislegierung zwischen 19,1 Gew-% und 30 Gew-% beträgt.

3. Mehrschichtgleitlagerelement (1) nach Anspruch 1, **dadurch gekennzeichnet, dass** in der ersten Aluminiumbasislegierung der Anteil an Zinn zwischen 22 Gew-% und 27 Gew-%, der Anteil an Kupfer zwischen 1 Gew.-% und 2 Gew.- % und der Anteil an Mangan zwischen 0,4 Gew.-% und 0,8 Gew.-% beträgt.

4. Mehrschichtgleitlagerelement (1) nach einem der Ansprüche 1 bis 4, **dadurch gekennzeichnet, dass** ein Teil des Aluminiums in der ersten Aluminiumbasislegierung durch Silizium ersetzt ist, wobei der Anteil an Silizium zwischen 0,01 Gew.-% und 4 Gew.-% beträgt.

5. Mehrschichtgleitlagerelement (1) nach Anspruch 5, **dadurch gekennzeichnet, dass** das Verhältnis der Mengenanteile von Zinn zu Silizium in der Lagermetallschicht (4) zwischen 4 : 1 und 30 : 1 beträgt.

6. Mehrschichtgleitlagerelement (1) nach Anspruch 4 oder 5, **dadurch gekennzeichnet, dass** der Anteil des Siliziums, der als Ausscheidung in oder an der Zinnphase der ersten Aluminiumbasislegierung vorliegt, bezogen auf den gesamten Siliziumanteil der ersten Aluminiumbasislegierung zwischen 80 % und 100 % beträgt.

7. Mehrschichtgleitlagerelement (1) nach einem der Ansprüche 1 bis 6, **dadurch gekennzeichnet, dass** in der ersten Aluminiumbasislegierung zwischen 24 Gew-% und 26 Gew-% Zinn, zwischen 1,2 Gew.-% und 1,4 Gew.- % Kuper, zwischen 0,4 Gew.-% und 0,6 Gew.-% Mangan, jeweils zwischen 0,05 Gew.-% und 0,07 Gew.-% Chrom, Kobalt und Zirkonium und zwischen 0,06 Gew.-% und 0,08 Gew.-% Titan enthalten sind.

8. Mehrschichtgleitlagerelement (1) nach einem der Ansprüche 1 bis 6, **dadurch gekennzeichnet, dass** in der zweiten Aluminiumbasislegierung zwischen 1,6 Gew.-% und 1,8 Gew.- % Kuper, zwischen 0,7 Gew.-% und 0,9 Gew.-% Mangan, jeweils zwischen 0,12 Gew.-% und 0,14 Gew.-% Chrom, Kobalt und Zirkonium, zwischen 0,2 Gew.-% und 0,4 Gew.-% Silizium und zwischen 0,06 Gew.-% und 0,08 Gew.-% Titan enthalten sind.

9. Mehrschichtgleitlagerelement (1) nach einem der Ansprüche 1 bis 8, **dadurch gekennzeichnet, dass** die Lagermetallschicht (4) eine Schichtdicke (8) zwischen 300 µm und 3000 µm, insbesondere zwischen 1000 µm und 3000 µm, aufweist.
